# EUROPEAN PATENT APPLICATION

(11) **EP 4 802 898 A1**
(43) Date of publication of application: **09.09.2026**
(21) Application number: 26162513.1
(22) Date of filing: 05.03.2026
(51) Int. Cl.: A21C 9/06, A21C 11/00, A21C 15/00, A21D 13/30, A21D 13/41

(54) **APPARATUS AND METHOD FOR STUFFING A PIZZA CRUST**

(30) Priority: 07.03.2025 IT 202500004704
(71) Applicant: Italforno S.r.l., 41126 Modena (IT)
(72) Inventor: BARBIERI, Marco, 41126 MODENA (IT)
(74) Representative: Monelli, Alberto

(57) **Abstract**

Method for producing pizza comprising the following steps:
- providing a pizza dough;
- cooking, at least partially, the pizza dough in an oven (2) causing a leavening of the pizza; obtaining, due to the leavening, a perimeter crust of the pizza of a greater height than the central portion of the pizza;
- positioning an operating head (3) at the pizza;
- temporarily introducing into the crust of the pizza one or more nozzles (30) associated with the operating head (3);
- dispensing a stuffing inside the crust by means of one or more nozzles (30).

## Description

The present invention relates to a method and a plant for producing pizza, in particular a method and a production plant for producing pizza with a stuffed crust.

Pizza is a well-known gastronomic product obtained from a leavened base obtained from a dough made of flour and water. Pizza famously has a thicker perimeter crust, usually circular, which delimits a thinner central zone.

The crust can be defined by the dough only or can be internally stuffed.

In order to perform such stuffing, it is usually known to apply the product with which it is intended to stuff the crust on the perimeter edge of the pizza and then to fold such perimeter edge inwards to create the crust. In this manner, the product remains incorporated into the folded flap, stuffing it.

However, such a solution makes this process difficult to automate.

In this context, the task of the present invention is to provide a plant and a method for producing pizza with a stuffed crust that allows automated production in an industrial environment to be optimised. A further object is to facilitate the application of the stuffing system on existing lines. Another object is to perform stuffing without soiling the production line. Further features and advantages of the present invention will become more apparent from the indicative and thus non-limiting description of an embodiment of a plant and a method for producing pizza.

Such a description will be set forth herein below with reference to the accompanying drawings, provided for merely indicative and therefore non-limiting purposes, wherein:
- Figure 1 shows a schematic view of a plant according to the present invention;
- Figures 2 and 3 show prospective views of a component of the plant of Figure 1 in a first configuration;
- Figures 4 and 5 show the component of Figures 2 and 3 with some parts removed to better highlight others;

- Figure 6 shows an enlargement of the portion indicated by the letter B in Figure 2;
- Figures 7 and 8 show prospective views of a component of the plant of Figure 1 in a second configuration;
- Figures 9 and 10 show the component of Figures 7 and 8 with some parts removed to better highlight others.

In the appended figures, reference number 1 indicates a production plant for producing a pizza, in particular a production plant for producing pizza with a stuffed crust.

As is known, a pizza has a thinner central portion and a perimeter zone that is higher than the central portion. Such perimeter zone is defined as the crust. The plant 1 is intended for the industrial production of pizzas, typically then destined to be frozen or placed on the market for the public, for example in supermarkets.

The plant 1 comprises a cooking oven 2 for cooking a plurality of pizza doughs. Typically, the oven 2 accommodates a plurality of pizzas simultaneously. The oven 2 is an industrial oven for cooking food products. As such and considered on its own, it can be of known type.

The plant 1 also comprises stuffing means 30 for stuffing the crust comprising an operating head 3.

Opportunely, the plant 1 comprises an arm 4 that supports the head 3. The head 3 is opportunely located at one end of the pizza. For example, the arm 4 can be a multi-axis robot, for example a 6-axis one. In an alternative solution, the head 3 can be supported by a Cartesian mover.

In the preferred solution, the stuffing means 30 (and therefore opportunely also any arm 4) is positioned downstream of the oven 2. Typically, downstream of the oven 2 a conveying line 5 along which the pizzas slide is present. The head 3 operates along the conveying line 5. The conveying line 5 comprises, for example, a conveyor belt. The head 3 surmounts the conveyor belt.

Preferably, the pizzas along at least one section of the conveying line 5 are arranged along several parallel rows. Advantageously, a corresponding head 3 for each row is present. In the preferred but non-limiting solution, three parallel rows of pizzas are present, arranged along the conveying line 5. For the sake of simplicity, reference will be made below to one head 3, but similar considerations can be repeated for any other heads (operating in parallel).

The head 3 operates while the conveying line 5 is in movement. Therefore, once the head 3 is positioned at a pizza, it operates by advancing together with the pizza to perform the stuffing operation. Afterwards, it will move to perform a similar operation on the next pizza. It is therefore a tracking system.

The operating head 3 comprises one or more nozzles 30 for dispensing the stuffing. In the preferred solution, there is a plurality of nozzles in order to make stuffing of the crust more efficient, quicker and more uniform. Preferably, but not necessarily, the number of nozzles is comprised between 20 and 35, for example greater than or equal to 24 and lower than or equal to 27. The nozzles 30 define needles capable of penetrating inside the pizza crust.

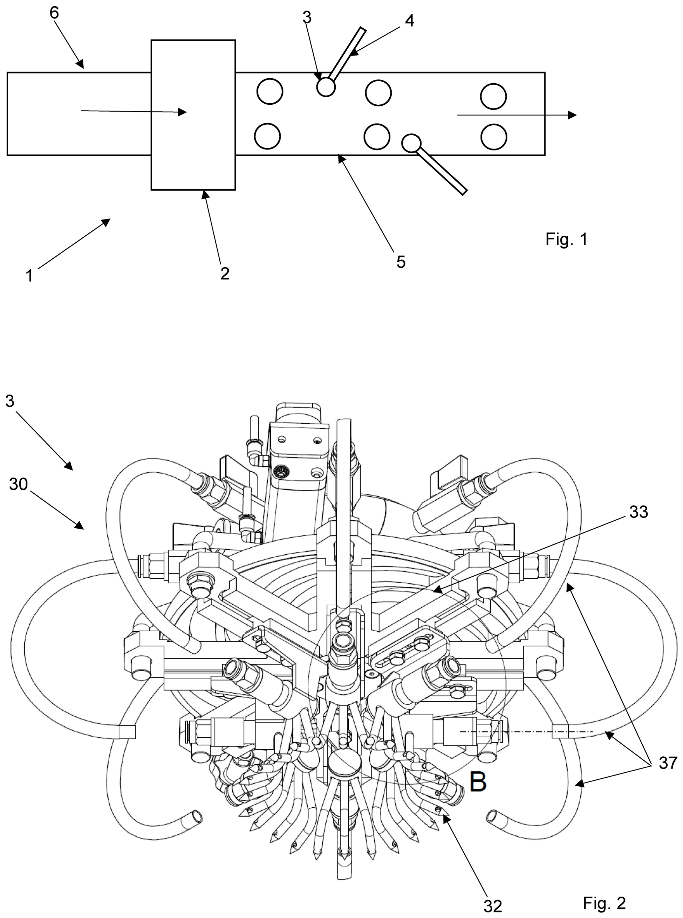

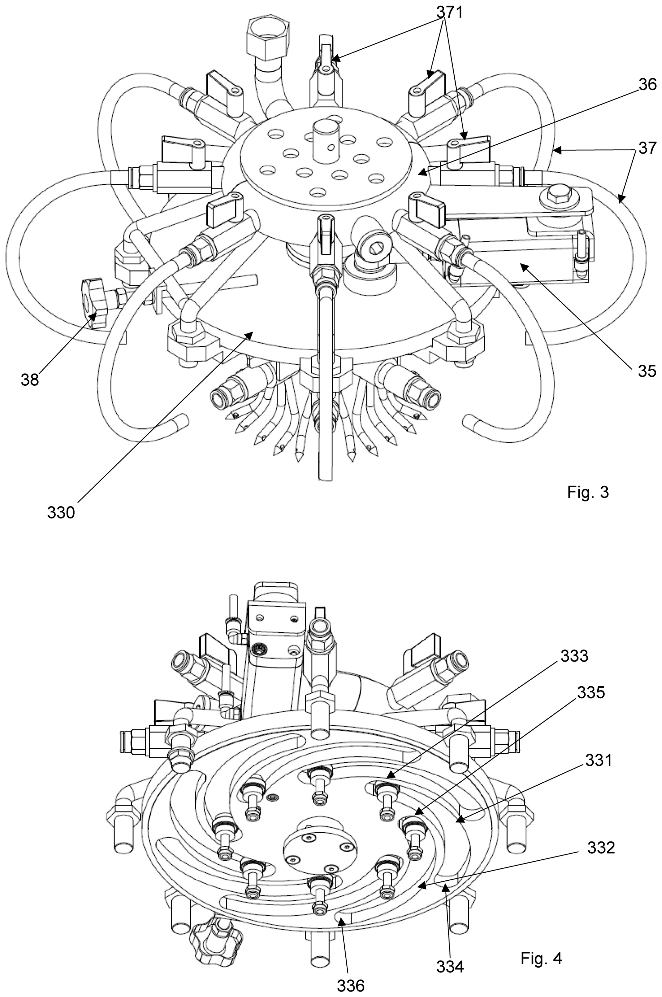

Advantageously, the head 3 comprises a tank 36 for the stuffing. Such tank 36 can, for example, have an annular shape. The tank 36 can be placed in fluid communication with said one or more nozzles 30. In particular, a single tank 36 is present and connected with the various nozzles 30 by means of connecting lines 37 that allow conveying of the stuffing from the tank 36 to the nozzles 30. Opportunely, taps 371 can be present which allow or do not allow passage along such connecting lines 37. The connecting lines 37 comprise/are formed by a corresponding flexible tube, for example in a food-grade plastic material. In Figures 2, 3, 7 and 8, such flexible tube, for simplicity of embodiment, is not shown connected to the assembly of nozzles, but it is to be intended that it is (along, for example, the dash-dot line shown as an example for an individual case). Preferably, the taps 371 are adjustable independently from one another (this facilitates the cleaning operation; for example, a single tap at a time can be opened and the pressure along the corresponding connecting line 37 will therefore be higher, thus allowing a more efficient cleaning). Opportunely, the nozzles 30 are arranged in a crown. In particularly, they are angularly equally spaced apart. They are therefore positioned in succession along a circular line. Preferably, they are at a lower height than the tank 36 (in particular, they are below the tank 36). The nozzles 30 can possibly be organised into assemblies, for example assemblies of three, as exemplified in Figure 3. In that case, a common connecting line for each assembly of nozzles 30 is present.

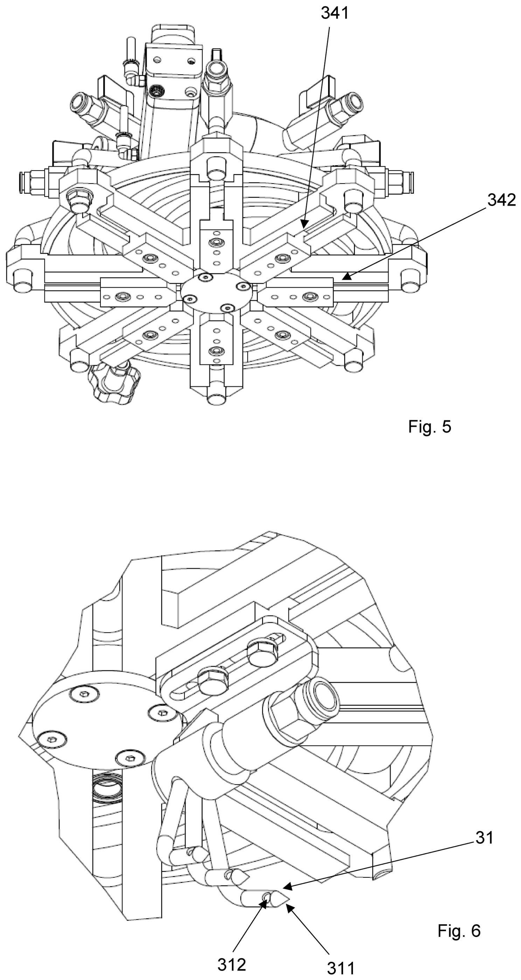

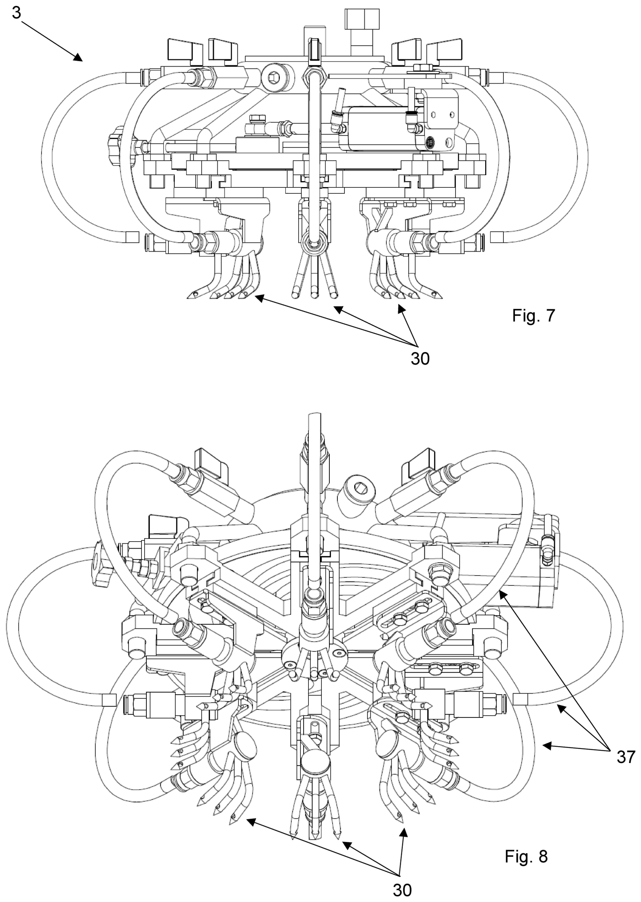

The operating head 3 can assume a rest configuration (Figures 1-6) and an operating configuration (Figures 7-10). Passing from the rest configuration to the operating one, the nozzles 30 of the head 3 penetrate into the pizza crust, allowing introduction of the stuffing into the crust. Passing from the operating configuration to the rest one, the nozzles 30 are extracted from the pizza crust; the head can thus be moved towards another pizza (or alternatively can wait for the next pizza moved by the conveying line 5). During movement from one pizza to another, the head 3 remains in the rest configuration. In the operating configuration, the nozzles 30 are moved more towards the outside of the head 3 compared to when in the rest configuration. The nozzles 30 in the rest position are closer to the centre of the head 3, whereas in the operating configuration they are further away from the centre of the head 3. Opportunely, in the operating configuration the nozzles 30 are radially more external than in the rest configuration. Opportunely, also the trajectory followed by the nozzles 30 to move between the operating configuration and the rest configuration is radial. Movement of the nozzles 30 from the rest position to the operating position occurs along a plane that is opportunely horizontal. In particular, such plane is parallel to the zone of the conveying line 5 at which the head 3 is located. This minimises the risk that insertion of the nozzles 30 into the crust causes an undesired movement of the pizza or that extraction of the nozzles 30 from the crust causes a raising of the pizza.

The operating head 3 comprises guide means 33 for guiding said nozzles 30. The nozzles 30 comprise at least a first and a second nozzle 31, 32. The first and the second nozzle 31, 32, in the solution exemplified in Figures 2 and 3, form part of separate assemblies of nozzles (i.e. connected to the tank 36 by means of different connecting lines 37). The guide means 33 comprises a disc 330 comprising a first and a second groove 331, 332 that, in turn, extend from an innermost end 333, 335 thereof to an outermost end 334, 336 thereof. The innermost end 333, 335 is therefore closer to the centre of the head 3 than the outermost end 334, 336. The outermost end 334, 336 is therefore closer to the outer perimeter of the head 3. Opportunely, the first and the second groove 331, 332 are arc-shaped. Advantageously, there are as many grooves as there are nozzles 30 to be moved between the rest configuration and the operating configuration.

The guide means 33 opportunely comprises a first and a second guide 341, 342. The first and the second guide 341, 342 are not obtained on the disc 330. The first and the second guide 341, 342 can be arranged adjacent to the disc 330. The first and the second guide 341, 342 are obtained above or are obtained below the disc 330. The first and the second guide 341, 342 are therefore separate elements from the disc 330. The disc 330 can be provided with a relative motion relative to the disc 330. In other words, the disc 330 can rotate relative to the first and to the second guide 341, 342. The first nozzle 31 is associated with the first groove 331 and with the first guide 341. The second nozzle 32 is associated with the second groove 332 and with the second guide 342. The operating head 3 comprises an actuator 35 adapted to place the disc 330 in rotation. For example, such actuator 35 can comprise a piston that moves the disc 330. A rotation of the disc 330 corresponds to:
- both a movement of the first nozzle 31 along the first groove 331 and the first guide 341;
- and a movement of the second nozzle 32 along the second groove 332 and the second guide 342.

Consequently, the first and the second nozzle 31, 32 will move towards the inside or towards the outside of the head 3.

Opportunely, an adjustable end stop 38 can be present. For example, such end stop 38 could be an adjustable screw. Based on the degree of tightening of such screw, it defines an abutment that intervenes before or after, consequently interrupting before or after the movement of the nozzles 30 caused by rotation of the disc 330.

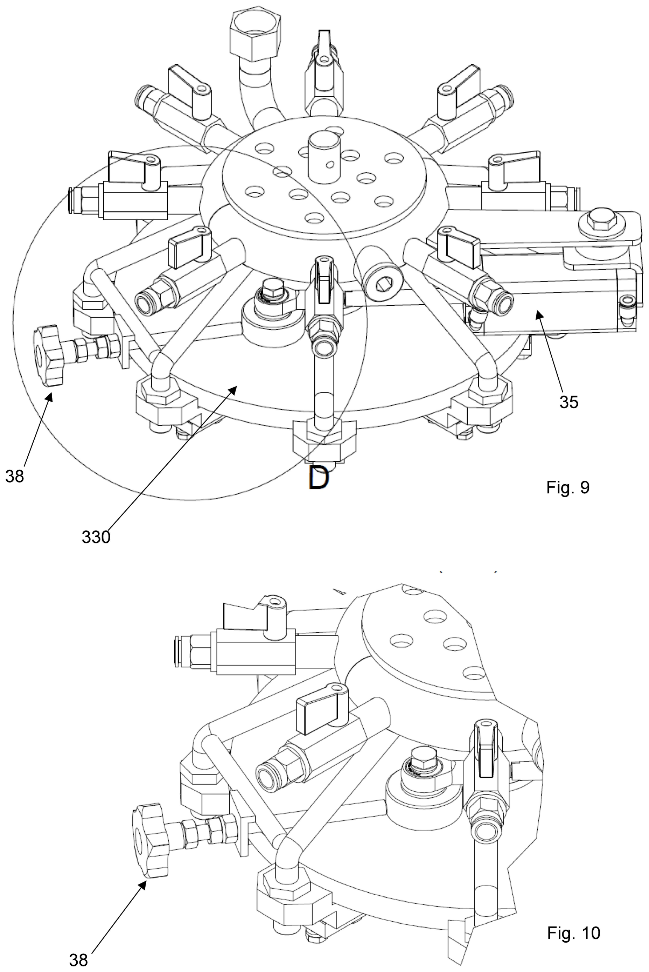

Figures 3 and 10 show the end stop 38 in the rest configuration of the head 3 and in the operating configuration of the head 3 (i.e. at the end of the travel passing from the rest configuration to the operating configuration).

Advantageously, at least one of such nozzles 30 (preferably each) comprises a pointed and closed end 311, provided with at least one hole 312 along a lateral side. Such arrangement of the hole 312 serves to facilitate the exit of the stuffing and to minimise the risk that it is blocked with the material of the crust.

The present invention relates to a method for producing pizza, in particular a method for producing pizza with a stuffed crust. Such a method is opportunely implemented by means of a plant 1 having one or more of the features described above. The method comprises the step of providing a pizza dough. Typically, such dough is made using methods known for a food production line and is therefore not further described. Opportunely, several doughs are placed on and conveyed along a movement line 6 and a corresponding pizza will be obtained from each of them.

The method comprises, in fact, the step of cooking, at least partially, the pizza dough in an oven 2. Opportunely, this causes leavening of the pizza. A multitude of pizzas are introduced into the oven 2 and cooked simultaneously. The method also comprises a step of applying a layer of tomato purée in a central zone of the pizza dough before introducing it into the oven 2.

With leavening, a perimeter crust of the pizza of a greater height than the central portion of the pizza is obtained. This is due to the fact that a greater quantity of dough is left at the perimeter edge (which will therefore rise more) and the fact that the central part (weighted down by the presence of the tomato purée) will tend to rise less in height.

The method also comprises the step of positioning an operating head 3 at the pizza.

The step of positioning an operating head 3 at the pizza comprises the step of moving an operating arm 4 that supports the head 3 until the head 3 is positioned above the pizza. The head 3 is therefore centred above the pizza.

The step of positioning an operating head 3 at the pizza also comprises the step of making the operating head 3 descend at the pizza. Opportunely, the step of making the operating head descend provides for making the operating head 3 descend to a predetermined height (or, in any case, by a predetermined quantity). In such a situation, the head 3, by expanding, allows its nozzles 30 to be inserted inside the crust.

In the preferred solution, the operating head 3 comprises several nozzles 30, said nozzles 30 comprising at least a first and a second nozzle 31, 32. The method, in fact, comprises the step of temporarily introducing into the pizza crust one or more nozzles 30 associated with the operating head 3. The step of temporarily introducing into the pizza crust one or more nozzles 30 occurs downstream of the oven 2. In this manner, the crust is leavened and more risen than the central portion of the pizza and this allows or, in any case, facilitates the interception thereof by the nozzles 30.

The method then comprises the step of dispensing a stuffing inside the crust by means of said one or more nozzles 30.

The step of temporarily introducing into the pizza crust one or more nozzles 30 positioned in the operating head 3 comprises the step of moving the first and the second nozzle 31, 32 for dispensing the pizza towards the outside of the head 3 until they perforate the crust. During such movement, the first nozzle 31 moves along a direction different from that of the second nozzle 32 or along a same direction but in the opposite way relative to the second nozzle 32. Preferably, the nozzles 30 pass from a rest configuration to an operating configuration in which they lie further outside the head 3 than in the rest configuration. In the operating configuration, in fact, the nozzles penetrate into the crust. In the rest configuration, the nozzles 30 are retracted into a more compact configuration (thus they also facilitate movement). The step of moving the first and the second nozzle 31, 32 for dispensing the stuffing occurs radially along a same substantially horizontal plane.

The step of dispensing the stuffing inside the crust provides for dispensing a paste-like mixture at room temperature. Typically, the stuffing comprises one or more cheeses/dairy products. For example, it could be a mixture comprising scamorza cheese, ricotta and mozzarella.

The method then provides for the head 3 returning the nozzles outside the crust (typically into a radially more inner position). Subsequently, the head 3 is moved above a further pizza.

The step of positioning an operating head 3 at the pizza, the step of temporarily introducing into the pizza crust one or more nozzles positioned in the operating head 3, the step of dispensing a stuffing into the crust by means of one or more nozzles 30 occur while the pizza continues to move along a conveying line 5. In fact, the head 3 is located on a tracking mover of the pizza. Once the processing cycle on one pizza is completed, the head 3 moves onto the next one to repeat the stuffing operations.

After stuffing of the crust, the method can opportunely comprise the step of dosing further ingredients above the central portion of the pizza (for example: olives, pieces of salami, mozzarella and others). Such further ingredients could possibly mask any sliding marks left by the nozzles 30 on the tomato purée.

After the step of stuffing the pizza crust and possibly the dosing of further ingredients onto the pizza, the method comprises the step of freezing the pizza.

The present invention achieves important advantages.

In the first place, it allows to facilitate automation of stuffing of the crust, as it is much more practical and rapid than folding the perimeter edge of the pizzas after applying a layer of cheese onto them. Furthermore, it can be applied on existing pizza production lines.

A further important advantage is linked to the fact that, since the stuffing is applied downstream of the cooking oven, it is not subsequently heated other than in the domestic oven of the purchaser. It therefore minimises the risk of the stuffing being partially liquefied and leaking from the holes in the crust, soiling the pizza or the packaging thereof.

The invention thus conceived is susceptible to numerous modifications and variants, all falling within the scope of the inventive concept that characterises it. Moreover, all the details may be replaced by other technically equivalent elements. All the materials used, as well the dimensions, may in practice be any whatsoever according to needs.

## Claims

1. Method for producing pizza comprising the following steps:
- providing a pizza dough;
- cooking, at least partially, the pizza dough in an oven (2) causing a leavening of the pizza; obtaining, due to the leavening, a perimeter crust of the pizza of a greater height than the central portion of the pizza;
- positioning an operating head (3) at the pizza;
- temporarily introducing into the crust of the pizza one or more nozzles (30) associated with the operating head (3);
- dispensing a stuffing inside the crust by means of one or more nozzles (30).

2. The method according to claim 1, **characterised in that** the step of temporarily introducing into the pizza crust one or more nozzles (30) occurs downstream of the oven (2).

3. The method according to claim 1 or 2, **characterised in that** a layer of tomato purée is applied in a central zone of the pizza dough before introducing it into the oven (2).

4. The method according to any one of the preceding claims, **characterised in that** the step of positioning an operating head (3) at the pizza comprises the steps of:
- moving an operating arm (4) that supports the head (3) until the head (3) is positioned above the pizza;
- making the operating head (3) descend, said operating head (3) comprising a plurality of said nozzles (30), said nozzles (30) comprising at least a first and a second nozzle (31, 32);
the step of temporarily introducing into the pizza crust one or more nozzles (30) positioned in the operating head (3) comprises the step of moving the first and the second nozzle (31, 32) towards the outside of the head (3) until they perforate the crust, the first nozzle (31) moving along a direction different from that of the second nozzle (32) or along a same direction but in the opposite way relative to the second nozzle (32).

5. The method according to claim 4, **characterised in that** the step of moving the first and the second nozzle (31, 32) for dispensing the stuffing occurs radially along a same substantially horizontal plane.

6. The method according to any one of the preceding claims, **characterised in that** the step of dispensing a stuffing inside the crust provides for dispensing a paste-like mixture at room temperature.

7. The method according to claim 6, **characterised in that** the step of positioning an operating head (3) at the pizza, the step of temporarily introducing into the pizza crust one or more nozzles positioned in the operating head (3), the step of dispensing a stuffing into the crust by means of one or more nozzles (30) occur while the pizza continues to move along a conveying line (5).

8. A pizza production plant comprising:
- a cooking oven (2) for cooking a plurality of pizza doughs;
- means (30) for stuffing the crust comprising an operating head (3) comprising one or more nozzles (30) for dispensing the stuffing; said nozzles (30) defining needles capable of penetrating inside the pizza crust.

9. The plant according to claim 8, **characterised in that** said operating head (3) comprises:
i) guide means (33) for said nozzles (30); said nozzles (30) comprising at least a first and a second nozzle (31, 32); said guide means (33) comprising:
- a disc (330) comprising a first and a second groove (331, 332) that in turn extend from an innermost end thereof to an outermost end thereof;
- a first and a second guide (341, 342) that are separate from the disc (330); the first nozzle (31) being associated with the first groove (331) and with the first guide (341); the second nozzle (32) being associated with the second groove (332) and with the second guide (342);
ii) an actuator (35) adapted to place the disc (330) in rotation; a rotation of the disc (330) corresponding both to a movement of the first nozzle (31) along the first groove (331) and the first guide (341) and to a movement of the second nozzle (32) along the second groove (332) and the second guide (342).

10. The plant according to claim 8 or 9, **characterised in that** at least one of said one or more nozzles (30) comprises a pointed and closed end (311), provided with at least one hole (312) along a lateral side.
